# EUROPEAN PATENT APPLICATION

(11) **EP 3 453 778 A1**
(43) Date of publication of application: **13.03.2019**
(21) Application number: 18193305.2
(22) Date of filing: 07.09.2018
(51) Int. Cl.: C23C 4/00, B05D 3/04, C23C 4/18, B05B 5/00

(54) **SEGMENTED CERAMIC COATINGS AND METHODS**

(30) Priority: 08.09.2017 US 201715700010
(71) Applicant: United Technologies Corporation, Farmington, CT 06032 (US)
(72) Inventor: STROCK, Christopher W., Kennebunk, ME 04043 (US); LUTJEN, Paul M., Kennebunkport, ME 04046 (US)
(74) Representative: Dehns

(57) **Abstract**

A method comprising: spraying a ceramic coating to a substrate to a thickness of at least 5.0 mils (127 micrometers) without quench; and after the spraying, directing a carbon dioxide flow to a surface of the coating.

## Description

### BACKGROUND

The disclosure relates gas turbine engines. More particularly, the disclosure relates to ceramic coatings for gas turbine engine components.

Gas turbine engine gaspath components are exposed to extreme heat and thermal gradients during various phases of engine operation. Thermal-mechanical stresses and resulting fatigue contribute to component failure. Significant efforts are made to cool such components and provide thermal barrier coatings to improve durability.

Exemplary thermal barrier coating systems include two-layer thermal barrier coating systems. An exemplary system includes NiCoCrAlY bond coat (e.g., air plasma sprayed (APS), low pressure plasma sprayed (LPPS), or cathodic arc deposited) and yttria-stabilized zirconia (YSZ) (or gadolinia-stabilized zirconia (GSZ)) thermal barrier coating (TBC) (e.g., air plasma sprayed (APS) or electron beam physical vapor deposited (EBPVD)). Prior to and while the barrier coat layer is being deposited, a thermally grown oxide (TGO) layer (e.g., alumina) forms atop the bond coat layer. As time-at-temperature and the number of cycles increase, this TGO interface layer grows in thickness. An exemplary YSZ is 7 weight percent yttria-stabilized zirconia (7YSZ).

Exemplary TBCs are applied to thicknesses of 1-40 mils (0.025-1.0mm) and can contribute to a temperature reduction of up to 300°F (167°C) at the base metal. This temperature reduction translates into improved part durability, higher turbine operating temperatures, and improved turbine efficiency.

Additionally, ceramic coatings are used where considerations other than or in addition to heat are present. These include environmental barrier coatings and sealing coatings. Sealing coatings include abrasive and/or abradable coatings. In many such coatings a desirable microstructure has cracks normal to the coating surface. These cracks may form a segmented coating structure. In some systems, the segmentation is at predetermined locations associated with substrate patterning. Among other advantages, pre-formed cracks/segmentation may help reduce operational stresses which might otherwise cause failure (e.g., coating delamination/spalling) and thus improve strain tolerance.

Consider an uncracked/unsegmented coating slowly brought up to an operational temperature, particularly with a non-cooled substrate. The metallic substrate has a much higher coefficient of thermal expansion (CTE) than does the ceramic. As long as the substrate-to-ceramic bond is maintained, the heating will cause the substrate to experience compressive stress and the ceramic to experience tensile stress. Peak stresses will be near the bond. Thus, failure may initiate at the bond which may cause delamination/spalling.

United States Patent No. 4457948 to Ruckle et al. discloses a post-coating quench in molten tin to induce cracking.

United States Patent No. 8802199 to Strock et al. discloses formation of a segmented thermal barrier coating. The coating is built up by multiple coating passes (e.g., revolutions of the substrate relative to the coating spray. In a given pass, after the spray footprint passes a given location, the coating at that location may tend to cool and then contract and crack. A heat source is used to close cracks formed in a given pass so that the next pass does not fill the cracks. The cracks then reopen and the process repeats for a series of passes. This leaves the coating pre-cracked prior to first operational use. This process may be practically limited to higher modulus coatings such as relatively dense zirconia based materials including yttria stabilized zirconia sprayed to 95% theoretical density. Other examples include chromia and alumina based coatings. In general, the high modulus coating will have <10% porosity.

For lower modulus coatings, the coating may not crack upon leaving the spray footprint. Lower modulus coatings are defined as much by defect structure as they are composition. While low modulus coatings may be made of lower modulus ceramics such as a silicate, the predominant characteristic of a low modulus coating is its defect structure. Of primary importance to coating modulus is the degree of bonding between coating splats. Coatings deposited by relatively high temperature and velocity processes tend to have better bonding between splats and higher modulus while cooler and lower velocity spray processes tend to have less bonding between splats which results in lower modulus coatings. An example of a low modulus coating is pure aluminum oxide (>98% pure) deposited by air plasma spray (APS). The spray process using an Oerlikon Metco 3MB torch equipped with a 705 nozzle and operating on 100SCFH of argon and 8 scfh of hydrogen. The torch is operated at 28 kW power level. Powder (Metco 105NS)is fed by a Metco 9MPCL powder feeder at 30 g/min with 9 scfh of argon as carrier gas through a Metco #2 powder port. The part is moved with respect to the spray torch at 550 ft/min with a torch to part distance of 4 inches (0.1016 m). Multiple passes over the part surface build up the desired thickness.

United States Patent No. 5780171 to Nissley et al. discloses a high temperature (e.g., 1975°F (1079°C) post-coating heat treat cycle to help develop the desired crack structure. This has substantial costs due to extra time and furnace cost.

United States Patent No. 8535783 to Lutjen et al. discloses formation of a segmented thermal barrier coating by creating recesses in the substrate and allowing crack propagation from deformed rims of the recesses.

United States Patent No. 8692150 to Strock discloses use of a plasma spray torch to get particle temperature and velocity which is similar to that in a flame spray process plus the temperature control of the part itself. Also shown is a grooved surface of the coating that is used to help impart strain tolerance. This grooving both acts as a stress concentration to cause cracking in designated positions, but also acts, with the resultant cracks, as stress relief to the adjacent full thickness coating.

United States Patent 8790078 to Zajchowski et al., United States Patent Application Publication No. 2015231665A1, of Strock et al., and United States Patent Application Publication No. 2015231665A1 of Strock et al. disclose masking fixtures for masking the blade region of an integrally bladed rotor (IBR) so that one or two sealing portions adjacent the blades may be coated.

### SUMMARY

One aspect of the present invention involves a method comprising: spraying a ceramic coating to a substrate to a thickness of at least 5.0 mils (127 micrometers) without quench; and, after the spraying, directing a carbon dioxide flow to a surface of the coating.

An embodiment may additionally and/or alternatively include the spraying of the ceramic coating being to a thickness of at least 150 micrometers prior to the directing of the carbon dioxide flow.

A further embodiment of any of the foregoing embodiments may additionally and/or alternatively include the directing of the carbon dioxide flow comprising flowing particles of said carbon dioxide.

A further embodiment of any of the foregoing embodiments may additionally and/or alternatively include the directing of the carbon dioxide flow comprising repeated passes.

A further embodiment of any of the foregoing embodiments may additionally and/or alternatively include the repeated passes comprising rotating the component during directing of the carbon dioxide flow.

A further embodiment of any of the foregoing embodiments may additionally and/or alternatively include the repeated passes comprising at least five passes over a given location.

A further embodiment of any of the foregoing embodiments may additionally and/or alternatively include the directing of the carbon dioxide flow comprising one or more of: a standoff of 50 mm to 150 mm; a supercritical source; and initiating carbon dioxide flow before aiming the flow to cool the surface.

A further embodiment of any of the foregoing embodiments may additionally and/or alternatively include the directing of the carbon dioxide flow thermally contracting the coating so as to propagate cracks.

A further embodiment of any of the foregoing embodiments may additionally and/or alternatively include at least one crack being present in every millimeter of coating length; and the cracks extend from the coating surface.

A further embodiment of any of the foregoing embodiments may additionally and/or alternatively include the directing of the carbon dioxide flow cooling at least a depth of 50 micrometers of the coating to a temperature at least 200°C below the substrate temperature.

A further embodiment of any of the foregoing embodiments may additionally and/or alternatively include the spraying and the directing being performed in the same chamber.

A further embodiment of any of the foregoing embodiments may additionally and/or alternatively include, after the spraying, but before the directing, heating the substrate to a temperature of at least 260°C.

A further embodiment of any of the foregoing embodiments may additionally and/or alternatively include the spraying being performed using a plasma torch and the heating comprising heating with the plasma torch without flowing a coating material.

A further embodiment of any of the foregoing embodiments may additionally and/or alternatively include the coating being sprayed onto one of: a turbomachine rotor outer diameter surface; a turbomachine airfoil element; a turbomachine seal; and a turbomachine combustor component.

Another aspect of the present invention involves a method comprising: over a time interval spraying a thickness of at least 5.0 mils (127 micrometers) of a ceramic coating to a substrate without quench; and, after stopping the spraying, directing a vapor flow to a surface of the coating to cool the surface and initiate cracking of the coating.

An embodiment may additionally and/or alternatively include the directing being effective to locally reduce a temperature of the surface to at least 150°C below a local temperature of the substrate.

A further embodiment of any of the foregoing embodiments may additionally and/or alternatively include the directing being of the vapor and a solid or liquid phase.

A further embodiment of any of the foregoing embodiments may additionally and/or alternatively include the directing being of the vapor and the solid phase both consisting essentially of carbon dioxide.

A further embodiment of any of the foregoing embodiments may additionally and/or alternatively include the spraying and the directing being repeated for one or more additional cycles.

A further embodiment of any of the foregoing embodiments may additionally and/or alternatively include, after the spraying, but before the directing, heating the substrate to a temperature at least 225°C above the temperature of the vapor flow.

A further embodiment of any of the foregoing embodiments may additionally and/or alternatively include the heating being by a torch of a spray gun used in the spraying.

Another aspect of the present invention involves a spray apparatus comprising: a chamber; a rotary part holder for holding a part in an operative position in the chamber and rotating the part around an axis of rotation; a spray gun system and a quenching system. The spray gun system comprises: a plasma torch; a ceramic feedstock supply; and a feeder for the ceramic feedstock. The quenching system comprises: a supercritical compressed carbon dioxide supply; and a plurality of outlets coupled to the compressed carbon dioxide supply and distributed about the axis.

Another aspect of the present invention involves a spray apparatus comprising: a chamber; a rotary part holder for holding a part in an operative position in the chamber and rotating the part around an axis of rotation; a spray gun system and a quenching system. The spray gun system comprises: a plasma torch; a ceramic feedstock supply; and a feeder for the ceramic feedstock. The quenching system comprises: a compressed carbon dioxide supply; and at least one outlet coupled to the compressed carbon dioxide supply and mounted to move with the plasma torch.

An embodiment may additionally and/or alternatively include at least one of: the at least one outlet being oriented to direct a cooling flow to the coating while the spray gun system is spraying; and the at least one outlet being oriented to point away from the coating while the spray gun system is spraying in a first condition and shiftable to a second condition where the at least one outlet is oriented to direct a cooling flow to the coating.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a side schematic view of a coating system.
FIG. 2 is an end view of the system of FIG. 1.
FIG. 3 is a pre-cracking schematic sectional view of a coated substrate.
FIG. 4 is a post-cracking schematic sectional view of the coated substrate.
FIG. 5 is a side schematic view of an alternate system.
FIG. 6 is a temperature-time plot (not to scale) for a first ceramic coating process.
FIG. 7 is a temperature-time plot (not to scale) for a second coating process.
FIG. 8 is a temperature-time plot (not to scale) for a third coating process.
FIG. 9 is a schematic sectional view of the coated substrate during cracking.
FIG. 10 is a temperature vs. depth plot for the coated substrate of FIG. 9.
FIG. 11 is a schematic sectional view of the coated substrate during cracking.
FIG. 12 is a temperature vs. depth plot for the coated substrate of FIG. 11.

Like reference numbers and designations in the various drawings indicate like elements.

### DETAILED DESCRIPTION

As is discussed below, a rapid post-coating quench initiated at the coating exterior surface can cause pre-cracking/pre-segmentation of the coating. In particular, rapid cooling at the coating surface can impose a high temperature difference/gradient across the coating thickness/depth. This may cause crack initiation at/near the coating surface rather than at/near the bond. Initiating away from the bond is believed to reduce chances of bond failure/spalling. Additionally, there may be less of a branching tendency in the cracks relative to cracks propagating outward from substrate cooling. Reduced branching increases structural integrity at a given level of modulus reduction and vice versa.

As is discussed further below, quenching with a stream of low temperature carbon dioxide (CO₂) may be a particularly relevant technique. The CO₂ is stored as a gas at high pressure. Its expansion at discharge to ambient pressure sufficiently reduces temperature that a portion of the CO₂ freezes. Thus, a stream of CO₂ vapor and fine CO₂ particles may be generated by discharge. The ratio will depend on the temperature and pressure of the source CO₂ and characteristics of the orifice or nozzle through which the CO₂ is discharged. Small nozzles will be less efficient at producing solid particles due to greater turbulent mixing with the atmosphere compared with a nozzle of larger diameter. These factors may be chosen to provide sufficient particles. Sufficient particles could be determined iteratively by varying the parameters and then performing cross-sectional metallography on the coated part to observe the effect. Theoretically, an alternative would be to measure surface temperature during the cooling, but the cloud of CO₂ will interfere with such measurement.

This mixed phase stream may have several advantages over a similar temperature (or even lower temperature) single-phase vapor stream. The latent heat of sublimation of the particles generally increases heat transfer from the coating. The kinetic energy of the particles allows them to get relatively close to or reach the surface (penetrating what would otherwise be a boundary layer or stagnation zone that impedes heat transfer) to improve heat transfer even more.

As discussed above, an exemplary gas turbine engine component is a rotor such as an integrally bladed rotor (IBR). An exemplary IBR comprises a metallic substrate (e.g., a nickel-based superalloy substrate formed by powder metallurgical (PM) or wrought forging followed by machining as is known in the art. The rotor may represent an assembly of multiple sections end-to end (e.g., welded or bolted). The rotor is to receive a ceramic coating at least over a local area. In various embodiments, the coating may be applied prior to joining multiple sections or afterward. The particular example of a coating is a ceramic rub coating on the outer diameter (OD) surface(s) of rotor section(s) between the blade stages of the ultimate rotor. In operation of the exemplary engine, this region rubs against the inboard tips of an associated stage of so-called "cantilevered vanes". In certain engine configurations, the rotor may have a similar interaction with inboard tips of a counter-rotating blade stage.

At least in the local area, the substrate may have a bond coat (e.g., a metallic bond coat such as an MCrAlY or a diffusion aluminide) and then a ceramic layer atop the bond coat. An exemplary ceramic layer is a sprayed alumina layer. Exemplary techniques for both the bond coat and the ceramic layer are spray techniques (e.g., plasma spray).

An exemplary manufacture process is performed as a follow-on to a conventional manufacture process as outlined above. The substrate is conventionally manufactured. The bond coat (e.g., MCrAlY (e.g., NiCoCrAlY, CoNiCrAlY, NiCoCrAlYHfSi), nickel-aluminum (e.g., Ni5Al, Ni20Al), or the like) may be conventionally applied (e.g., spray such as air plasma spray (APS) or high velocity oxy-fuel spray (HVOF)).

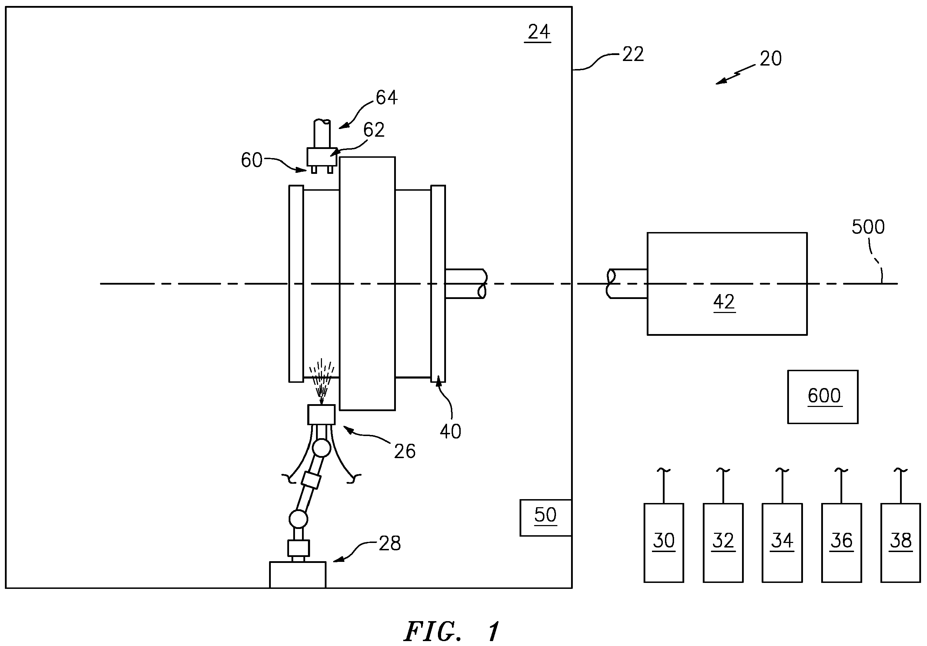

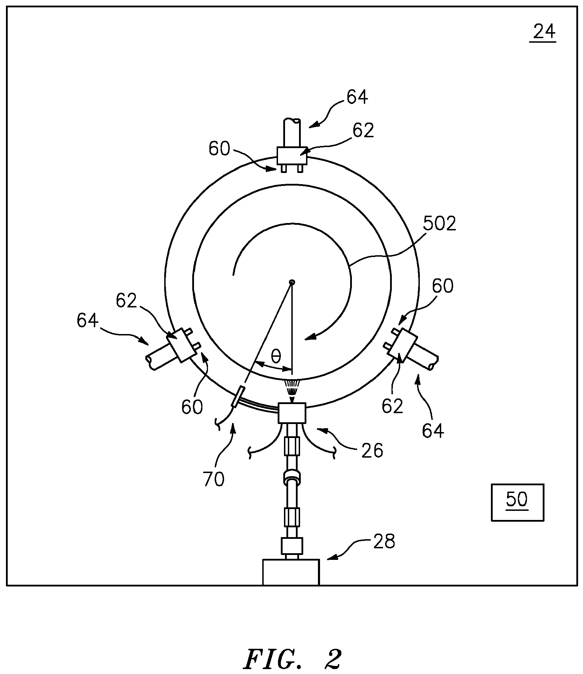

Exemplary bond coat APS is performed in a system 20 (FIG. 1) first chamber (spray booth) 22 without preheat. The spray process will add heat, so that cooling may be used to reduce oxide content of the bond coat. Cooling may also allow polymer masking (either pre-formed masks or *in* situ-formed masks or sealants applied to pre-formed masks) to be used. Cooling may also protect the substrate metallurgy. Exemplary cooling (e.g., keeping the substrate ≤250°F (≤121°C)) involves application of frontal air jet or external cooling air jets. A further variation involves using CO₂ cooling at a low intensity). For example, an optional nozzle 70 (FIG. 2) having a single 0.016 inch (0.41 mm) diameter orifice may be supplied by 150 psi (1.03MPa) CO₂ and traverse with the spray torch 26 across the rotating part during coating. The CO₂ nozzle 70 is positioned by an amount θ (FIG. 2, e.g., 5° to 20°) degrees around the part relative to the spray torch in the direction where the heated coating area is exiting from in front of the spray torch. The nozzle is an exemplary 4 inches (0.1016 m) away from the coating surface and aligned to impinge approximately perpendicularly to the coated surface. The nozzle may be mounted to the torch (e.g., shown) or separately mounted (e.g., on a separate industrial robot). A further variation is discussed below.

The ceramic may also be applied by conventional methods. In one example, a spray process is performed in the interior 24 of the same chamber 22 (FIG. 1) as bond coat spray using the same torch 26. This may immediately follow or there may be a cooldown and opening of the chamber to allow inspection and/or testing of a part or a test coupon. The exemplary plasma spray process uses an argon-hydrogen process gas mixture. Aluminum oxide powder is fed into the plasma spray plume through a powder port using argon carrier gas. In the exemplary FIG. 1 system 20, the torch 26 (which forms the plasma spray gun) is carried by a conventional industrial robot 28. The torch may be connected to external sources of process gas 30, carrier gas 32, powder 34, electricity, and a controller 600. The foregoing is merely illustrative. There may be many forms of gas sources, powder sources, and the like. As noted above, the powder source may be swapped out to shift between coating stages or there may be multiple powder sources connected in parallel and valves to switch therebetween. Even at a given stage, where blends are used, multiple powder sources may be connected and run in parallel to provide the blend or material may be pre-blended in a single source. FIG. 1 also shows an exemplary high pressure CO₂ source 36 for quenching of the ceramic and an exemplary low pressure CO₂ source 38 for the optional cooling during bond coat application via the nozzle 70.

The relative motion of substrate and spray torch may be achieved by rotating the substrate (e.g., continuous rotation of a fixture/mask 40 in a direction 502 (FIG. 2) about an axis 500 via a rotary actuator 42) and linearly traversing the torch (e.g., reciprocally). For an example substrate being an outer diameter sealing surface of an IBR of an exemplary 33 cm diameter with a 2.5 cm wide (longitudinal span), the substrate (e.g., masked as discussed above) may be rotated to achieve a surface speed of 1250 mm/s and the torch is traversed over the coating area at 100 mm spray distance and a speed to achieve 5 mm spray pattern pitch (index per revolution). The traversing is repeated to produce a ceramic coating of the desired thickness. Exemplary thickness is 300 micrometers (more broadly 100 - 400 micrometers) for the rotor coating application. Greater thicknesses are particularly relevant to other applications and potentially up to 1000 - 2000 micrometers for thick TBC or BOAS abradable applications. As is discussed below, thick coatings, particularly above about 1000 micrometers, may involve a repeated process of applying a sublayer, stopping spraying, quenching, and then resuming spraying of the next sublayer. After a continuous spray to such a depth of over about 1000 micrometers, the quench may not provide sufficient thermal gradient across the coating depth to induce cracking.

During this process, substrate temperature may be allowed to increase (e.g. without cooling or with lesser cooling than in the bond coat application) and rise higher than during the bond coat application.

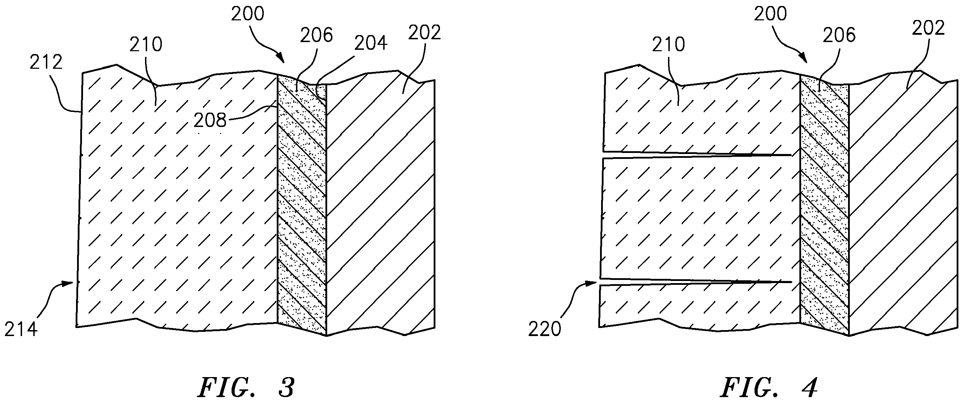

FIG. 3 shows the article/component 200 having a substrate 202 with a surface 204. A bond coat 206 with an outer surface 208 is atop the substrate. The ceramic 210 is atop the bondcoat and has an outer surface 212. The surface may have weak points such as naturally-formed gaps 214, open porosity, or the like. Post-spray CO2 treatment tending to contract the ceramic at the surface may initiate cracking at the weak points with the cracks 220 (FIG. 4) propagating inward toward the substrate.

An exemplary CO₂ treatment occurs in the same chamber (spray booth) as the ceramic coating application. In one example of treatment immediately following coating, the temperature at the end of the coating process is sufficient (e.g., 800°F (454°C)). If not, the substrate may be heated to above the temperature at which ceramic coating application occurred to reach that sufficient temperature. One benefit of limiting part and coating temperature to 600°F (316°C)) or lower is that polymer masking may be used. Exemplary heating is or includes using the plasma of the same torch 26 previously used to apply the ceramic coating while the substrate remains in the spray position in the spray booth

(e.g., still held by the same motorized or robotic fixture - the powder feed is simply shut off). Exemplary component rotation is at 120 rpm. This may be the same or higher than the rotation speed during coating to produce more uniform heating. Torch traversal may be similar to that used in coating, but, also may be at the same or greater speed.

Such further heating may volatilize or burn off the masking material. The subsequent CO₂ blasting (impingement of solid CO₂ particles) may be effective to clean any loose overspray or masking residue from exposed areas of the part.

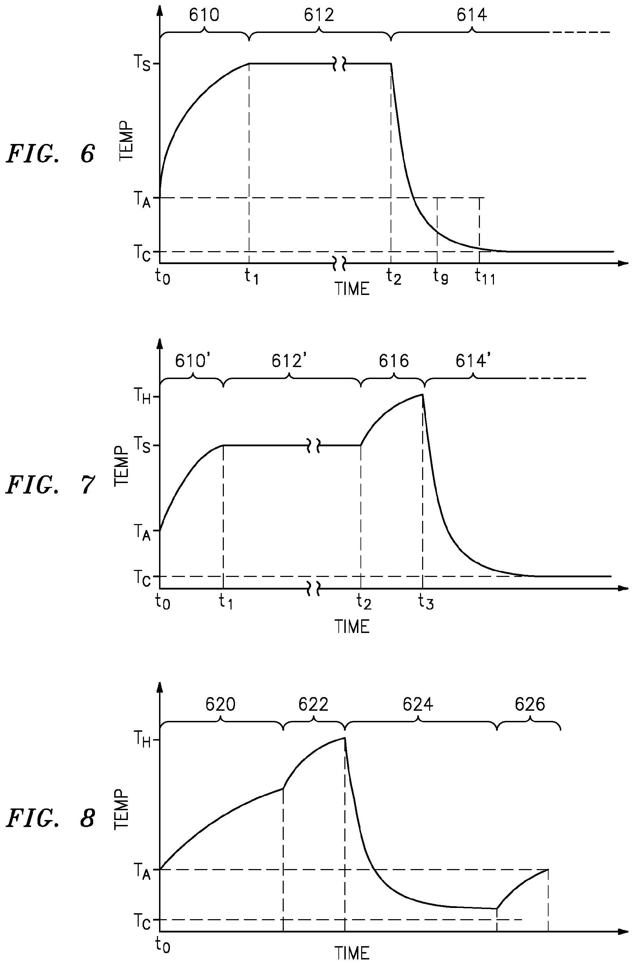

FIG. 6 shows an example of a temperature plot wherein the temperature during the spray is essentially constant at a value T_{S} sufficient for the subsequent cracking. FIG. 6 shows the substrate starting out at ambient temperature T_{A} at time t₀ and being preheated to T_{S} over an interval 610 to a time t₁. Thereafter, spray commences over an interval 612 to a time t₂. In this example, the temperature is a smoothed temperature reflecting an average over both revolutions and axial traversals. Temperature at any given location may increase as the substrate approaches the torch footprint and decrease at some point after passing beyond the torch footprint. The quench 614 (time scale stretched) occurs at t₂ dropping surface temperature to a cooled value T_{C} below ambient.

FIG. 7 shows a similar example of the situation wherein the temperature T_{S} during spray is insufficient for the desired cracking to be achieved upon quench. Accordingly, the preheat interval 610' and spray interval 612' may be followed by the further heating stage 616 until a time t₃ whereafter the cooling 614' may follow. The exemplary heating temperature T_{H} may be to or above the FIG. 6 spray temperature.

Although not shown, additional variations may include pauses between the intervals. Additionally, there may be cooling such as to ambient between certain stages. One example of this cooling would be cooling prior to the stage 616.

A purely conventional setup may be insufficient to achieve the desired pre-quench temperature. Achieving the pre-quench temperature may involve one or more additional aspects. Insulation may be added to the component to limit heat loss during heating. For example, US patent 8,468,969 to Beaudoin et al., June 25, 2013 provides an example of masking for an integrally bladed compressor rotor that insulates the part so that higher temperature may be reached using any given heat source. An auxiliary heat source 50 may be added to the chamber (e.g., radiant, laser, flame, plasma, inductive, convective).

A further variation involves removing the part from the spray booth and heating it in an oven (e.g., for the heating 616). A broader range of target pre-quench temperatures is at least 500°F (260°C), more particularly 500°F to 1200°F (260°C to 649°C) (or 450°C to 649°C) for IN718 or ME16-type base metals and as high as 1500°F (816°C) with next generation high compressor materials such investment cast IN100.

Due to the higher coefficient of thermal expansion of the substrate relative to the ceramic, the heating will expand the substrate, placing the ceramic in tension.

After target temperature is reached, the heating may be terminated (e.g., shutting off the plasma torch, and any additional heat source). CO₂ flow is started (valves opened) and flow directed to the component. In an exemplary embodiment, the component is rotated (e.g., continues the rotation of the coating stage and/or the subsequent heating stage, if any) .

Flowing of CO₂ cools the ceramic coating surface to form the cracks by achieving a thermal gradient sufficient to cause radial crack formation and propagation into the ceramic layer from the surface. A temperature differential between the coating surface and substrate generates the tension (or additional tension) in the ceramic surface that is necessary for crack formation. The level of this tension or imposed thermal differential that is required depends on coating strength, the absolute and relative CTE, thermal conductivity, and the like. The CO₂ flow may be at a temperature of at least 225°C below the temperature of the substrate immediately before quenching. The CO₂ flow may be effective to achieve, at least transiently, a temperature difference of at least 150°C, more particularly at least 200°C, at least 250°C, or an exemplary 250°C to 400°C between coating surface and substrate.

The number and distribution of CO₂ nozzles 60 may depend on component size and shape. In one group of examples, the nozzles are arrayed axially and circumferentially. On a single interstage area of a rotor, one or two axial positions may be sufficient. Three circumferential positions may be sufficient. Thus, with the two and three numbers, there would be six nozzles. Standoff distance may be low in order to best cool (e.g., 300mm or less or 150 mm or less or an exemplary 50mm to 150 mm).

An example of the six nozzles in FIGs. 1 and 2 is three pairs of first and second nozzles, the first nozzles at one axial position and the second nozzles at another axial position circumferentially aligned with the associated first nozzles. The pairs may be equally circumferentially spaced. In variations, there may be staggerings to more broadly distribute cooling flow. The two nozzles of each pair may be mounted to a common housing 62 which may in turn be positionable via an actuator 64 (e.g., an industrial robot) to allow it to be brought into operative proximity to the surface to be treated. Such robots may be coupled to the controller 600 for control and to a CO₂ source 36 (e.g., a controlled group of tanks).

Thus one detailed example is six 1.0mm diameter CO₂ nozzles, each 100 mm from the component aimed radially at the component in pairs that are spaced axially with 1.5 cm spacing and the three pairs spaced equally around the component. For good process repeatability, exemplary CO₂ pressure is at least about 1100psi (7.58MPa) so that the CO₂ supply is in a supercritical state. For example, the critical point is 31.1°C and 1071 psi (7.38 MPa). At such a sufficient pressure, and with sufficient cross-section of flowpath to the nozzles, mixtures of liquid and gas do not form in the plumbing resulting in more consistent control of flow rates. To achieve this flow, the control valve may be located on or very close to the pressure vessel (tank). More broadly, however, pressure may be at least about 150psi (1.03MPa) or 300psi (2.07MPa) or 1000psi (6.89MPa) or higher or 1000psi (6.89MPa) to 1500 psi (10.3MPa) or 1071 psi to 1500psi(7.38MPa to 10.3MPa).

Exemplary component rotation during cooling is at 120 rpm. This may be approximately equal to or greater than the rotation speed during coating. The rotation speed required to achieve uniform cooling of the surface and efficient use of the cooling medium depends on the cooling nozzle arrangement and characteristics. The intent is to achieve a radial gradient, not a gradient over the surface of the coating. Rotation speed in conjunction with nozzle arrangement and thermal diffusivity of the coating serve to establish a uniform thermal gradient through the coating. Too slow a rotation with widely spaced nozzles will allow heat to conduct toward the coating surface and reduce the thermal gradient in a region translating between cooling nozzle locations. This is undesirable because the region between cooling nozzle locations may drop in temperature to a level insufficient to create the desired crack structure once translated to the cooling nozzle impingement location. For example, the angular region between cooling nozzles 60 will be subject to some cooling by the cold CO₂ gas deflected from the primary solid CO2 particle / CO₂ gas impingement location (at insufficient heat transfer rate to establish the desired gradient).

The exemplary CO₂ nozzles are stationary and turned on either immediately after spray is complete/terminated if sufficient heating is accomplished during coating, or after the desired temperature is reached if there is a post-spray heating.

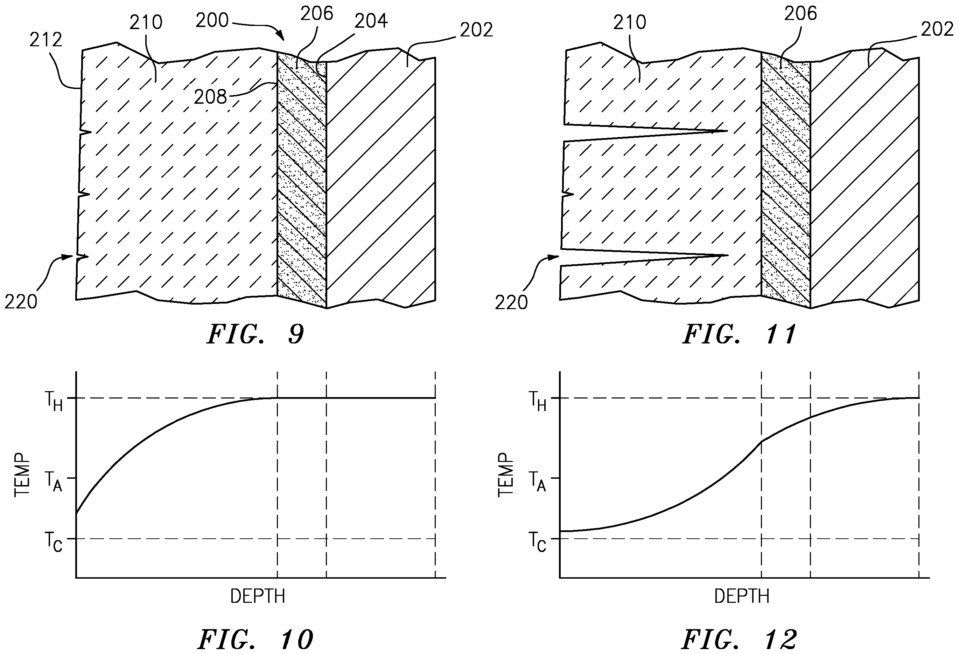

The CO₂ flow draws heat out of the coating at the surface, contracting the surface and causing cracks to propagate inward toward the substrate. By imposing a sufficiently high thermal gradient, shrinkage at the coating surface will induce a planar tensile stress resulting in cracking perpendicular to the surface. FIG. 9 shows the coating of FIG. 3 at initial stage of propagation of cracks 220 (approximately time tg in FIG. 6). FIG. 10, registered with FIG.9, shows a depthwise temperature distribution. FIGs. 11 and 12 respectively show the coating and temperature distribution at a later stage (approximately time t₁₁ in FIG. 6). In this example, it is seen that not all initial defects/cracks propagate inward or propagate to anything near similar depths. Exemplary cracks extend at least 50% of the local ceramic depth or at least 50% of the depth of the respective depth intervals (layers (or sublayers) which may each be the result of multiple passes/revolutions) quenched. In situations where a series of quenches are performed after corresponding intervals, there may be a mixture of deep cracks penetrating multiple intervals and cracks existing only in individual intervals or groups thereof. For example, a crack in one interval may be sufficiently close to one in the interval below so as to join up and continue depthwise toward the substrate. Or, the shrinkage/stress may be enough for the crack to propagate from one layer into virgin material of that below.

In one group of examples, the CO₂ flow is provided only after the entire ceramic of the ultimate coating is applied (e.g., to a ceramic thickness of at least 5.0 mils (127 micrometer) or at least 150 micrometers or or at least 200 micrometers or at least 20 mils (508 micrometers) with upper limits and alternative lower limits as are discussed above.

In other examples, the cycle of applying ceramic, further heating (if any) after terminating spray, and CO₂ flow is repeated for sublayers (e.g., each sublayer of at least 5.0 mils (127 micrometers), e.g., 5.0 mils to 50 mils (127 micrometers to 1270 micrometers) thick and formed by multiple passes) to build up a thick coating (e.g., thickness ranges discussed above). Such a process may be cyclical. A cyclical process allows for greater coating thickness to be built up and greater coating durability compared with a coating produced by a single buildup and cooling cycle. This advantage is achieved by forming cracks that relieve residual stresses and form expansion joints in the final coating. The expansion joints (cracks) reduce the stress in the ceramic coating and at the ceramic to bond coat interface. Those stresses being the result of thermal expansion mismatch between the ceramic and substrate, shrinkage stresses from deposition and stresses imposed by service. This advantage is primarily for coatings with 5.0 mils (127 micrometers) thickness or greater. In contrast, a relatively dense (<10% porosity) ceramic coating of 40 mils thickness, for example, may spontaneously spall due to deposition stresses. FIG. 8 shows a cyclical process. This particular illustrated cyclical process involves a spray interval 620 that starts at ambient temperature and continually raises the temperature until some particular condition is achieved. This particular condition may be a desired thickness or may represent a temperature above which coating properties may start to deteriorate if coating is continued to be applied above that temperature. There may optionally be a further post-spray heating 622 followed by the quench 624. It may be undesirable to begin the next cycle of spray at a cooled temperature below ambient. Accordingly, there may be a reheat interval 626 prior to restarting spray for the next layer. That reheat may be actively imposed using the spray torch or other heat source or it may be passive by residual heat conduction from the part. The availability of such passive reheat will depend on factors such as the thickness of the substrate. Alternative cyclical processes may resemble cyclical versions of the FIG. 6 or FIG. 7 processes or variations thereon.

Although the cracking may be fairly quickly accomplished, CO₂ may be supplied until the part temperature is dropped to a target cooled temperature (e.g., sufficiently close to room temperature to handle (at least with gloves)). The part temperature discussed here may be different from the surface temperature in the coated region of the surface. For example, it may be measured at the back side of the substrate opposite the area to which the coating was applied (a part could have other large masses of material that will respond more slowly than the coated area such as the heavy bore region of an integrally-bladed rotor (IBR) disk. More broadly, the cooled temperature may be less than 100°C or in the range of -78°C to 100°C at the coating surface. An exemplary range of 20°C to 100°C may be sufficient for cracking, but the lower temperatures may be required to get the remainder of the part down to a handling temperature. The cooling duration may be as short as a few seconds, provided that the surface of the coating has been cooled sufficiently to form the segmentation cracks.

Alternative gas cooling may involve use of liquid nitrogen or even air instead of CO₂. As expanding CO₂ can involve particles impacting the surface (or penetrating a boundary layer), expanding liquid N₂ can involve droplets impacting the surface (or penetrating a boundary layer).

The underlying coating process may be subject to further variations. One variation is spraying on a substrate that is not preheated or a substrate that is actually kept relatively cool during spray of the ceramic (see use of nozzle 70 discussed above). If the part is kept below about 600°F (316°C) or preferably 500°F (260°C), polymer masking can be used. This is quite desirable because metal tooling as masking tends to distort when heated and to not provide a good seal along the edges of the coating region. The substrate may be kept cool during coating application by techniques discussed above for cooling during bond coat spray. Such a situation would then be followed by heating prior to CO₂ quench. Without subsequent heating and CO₂ quench to form segmentation cracks, the coating may not have the necessary tolerance to the strains present during service. Consequently durability of the coating would suffer.

In basically the opposite variation, substrate temperature may be allowed to rise during coating. At various times after portions of the coating have been applied, aggressive CO₂ cooling may be applied to bring the part temperature down and form the radial shrinkage cracks. Alternatively viewed, this is a subset of the genus of cooling after multiple passes described above. Issues of substrate geometry may influence whether a steady state temperature can be maintained during spray without such cooling intervals. Because the coating goes down in tension, the cracks will be at least partially open unless the coating surface is heated to a higher temperature than the substrate. To avoid filling the cracks or depositing a layer of undesirable coating properties on the cooled surface, the spray would be shut off, cooling applied, cooling shut off, substrate heated (e.g., via the torch or conduction of residual heat from the substrate) until the cracks are substantially closed, and then the coating resumed (e.g. turning back on a carrier gas/particle flow to the torch). This may be used to form thick coatings and a crack structure through a greater thickness of ceramic coating.

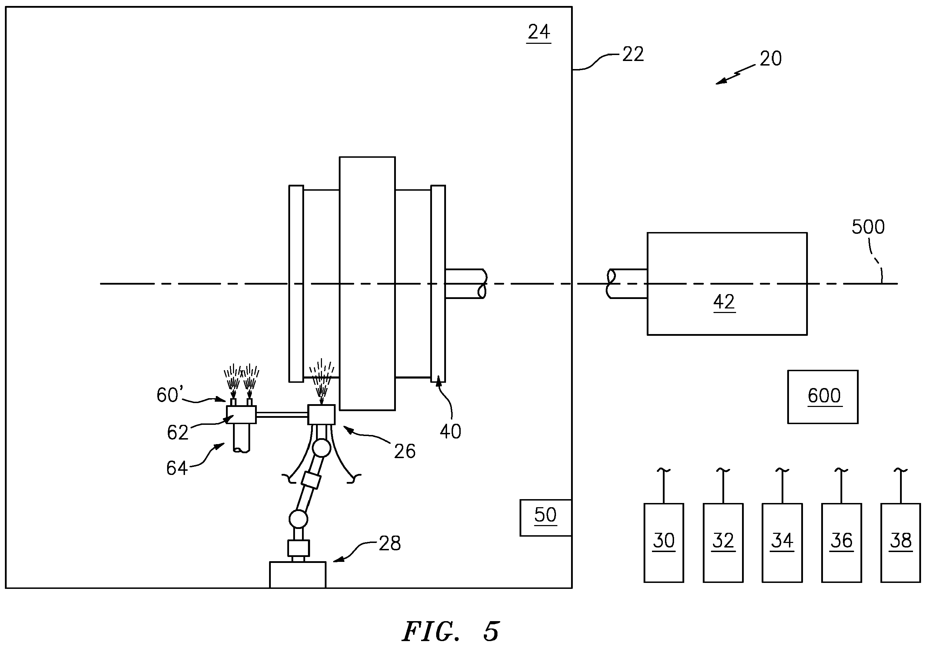

FIG. 5 shows an alternate system where the CO₂ nozzle 60' used for quenching the ceramic is mounted to the same robot as the spray torch. Distinguished from the nozzle 70, the nozzle is positioned to aim away from the substrate when the torch is oriented to face the substrate. After spraying (or after post-spray heating with the torch), the robot may re-aim so that the nozzle faces the part and the torch (now shut off) faces away. Flow may be commenced. Particular examples involve starting flow before the re-aiming so that a fully developed flow initially contacts the coating to provide a quicker cooldown. In one group of examples, the CO₂ flow is continuous even between quenching intervals. This may be particularly synergistic with use of a low pressure (subcritical) CO₂ source. In such a low pressure situation, the nozzle(s) 60' may instead be configured and supplied in a similar fashion to the nozzle 70. Otherwise, it may be configured and supplied in a similar fashion to the nozzle(s) 60.

Although an example is given of an IBR, there is broad applicability to hot section components, particularly actively cooled components and particularly the gaspath-facing surfaces thereof. Such components include combustor panels, combustor liners, fuel nozzles, fuel nozzle guides, and other combustor components as well as blades, vanes, and other airfoil components (including their airfoil external surfaces and platform and shroud surfaces). Further examples include exhaust structures such as thrust reverser components and thrust vectoring nozzles, particularly the gaspath-facing surfaces thereof.

The use of "first", "second", and the like in the following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

Where a measure is given in English units followed by a parenthetical containing SI or other units, the parenthetical's units are a conversion and should not imply a degree of precision not found in the English units.

One or more embodiments have been described. Nevertheless, it will be understood that various modifications may be made. For example, when applied to an existing baseline article and/or process, details of such baseline may influence details of particular implementations. Accordingly, other embodiments are within the scope of the following claims.

## Claims

1. A method comprising:
spraying a ceramic coating to a substrate to a thickness of at least 5.0 mils (127 micrometers) without quench; and
after the spraying, directing a carbon dioxide flow to a surface of the coating.

2. The method of claim 1 wherein:
the spraying of the ceramic coating is to a thickness of at least 150 micrometers prior to the directing of the carbon dioxide flow.

3. The method of claim 1, 2 or 3 wherein the directing of the carbon dioxide flow comprises:
repeated passes, optionally comprising:
at least five passes over a given location; and/or
rotating the component during directing of the carbon dioxide flow.

4. The method of any preceding claim wherein the directing of the carbon dioxide flow comprises one or more of:
flowing particles of said carbon dioxide;
a standoff of 50 mm to 150 mm;
a supercritical source;
initiating carbon dioxide flow before aiming the flow to cool the surface.

5. The method of any preceding claim wherein the directing of the carbon dioxide flow thermally contracts the coating so as to propagate cracks, and, optionally at least one crack is present in every millimeter of coating length and the cracks extend from the coating surface.

6. The method of any preceding claim wherein:
the directing of the carbon dioxide flow cools at least a depth of 50 micrometers of the coating to a temperature at least 200°C below the substrate temperature; and/or
the spraying and the directing are performed in the same chamber.

7. The method of any preceding claim further comprising:
after the spraying, but before the directing, heating the substrate to a temperature of at least 260°C, optionally
wherein the spraying is performed using a plasma torch and
the heating comprises heating with the plasma torch without flowing a coating material.

8. The method of any preceding claim wherein the coating is sprayed onto one of:
a turbomachine rotor outer diameter surface;
a turbomachine airfoil element;
a turbomachine seal; and
a turbomachine combustor component.

9. A method comprising:
over a time interval spraying a thickness of at least 5.0 mils (127 micrometers) of a ceramic coating to a substrate without quench; and
after stopping the spraying, directing a vapor flow to a surface of the coating to cool the surface and initiate cracking of the coating.

10. The method of claim 9 wherein the directing is effective to locally reduce a temperature of the surface to at least 150°C below a local temperature of the substrate.

11. The method of claim 9 or 10 wherein the directing is of the vapor and a solid or liquid phase and, optionally, the directing is of the vapor and the solid phase both consisting essentially of carbon dioxide.

12. The method of claim 9, 10 or 11 wherein the spraying and the directing are repeated for one or more additional cycles.

13. The method of any of claims 11 to 14 further comprising:
after the spraying, but before the directing, heating the substrate to a temperature at least 225°C above the temperature of the vapor flow, wherein the heating is optionally by a torch of a spray gun used in the spraying.

14. A spray apparatus comprising:
a chamber;
a rotary part holder for holding a part in an operative position in the chamber and rotating the part around an axis of rotation;
a spray gun system comprising:
a plasma torch;
a ceramic feedstock supply; and
a feeder for the ceramic feedstock; and
a quenching system comprising:
a compressed and optionally supercritical carbon dioxide supply; and
at least one outlet coupled to the compressed carbon dioxide supply and mounted to move with the plasma torch, or a plurality of outlets coupled to the compressed carbon dioxide supply and distributed about the axis.

15. The spray apparatus of claim 14 wherein:
the at least one outlet is oriented to direct a cooling flow to the coating while the spray gun system is spraying; and/or
the at least one outlet is oriented to point away from the coating while the spray gun system is spraying in a first condition and shiftable to a second condition where the at least one outlet is oriented to direct a cooling flow to the coating.
